# DEMANDE DE BREVET EUROPEEN

(11) **EP 2 703 931 A1**
(43) Date de publication de la demande: **05.03.2014**
(21) Numéro de dépôt: 12182175.5
(22) Date de dépôt: 29.08.2012
(51) Int. Cl.: G05D 23/02, G05D 23/19

(54) **Tête thermostatique et robinet thermostatique comprenant une telle tête thermostatique**

(71) Demandeur: COMAP, 69008 Lyon (FR)
(72) Inventeur: Boukari, Abdou-Fadel, 69007 Lyon (FR); Gortais, Joël, 69008 Lyon (FR)
(74) Mandataire: Maureau, Philippe

(57) **Abrégé**

Cette tête thermostatique (4) comprend un châssis (15) destiné à être monté sur une portion de raccordement (12) pourvue d'une soupape de réglage de débit (8), un poussoir (18) monté mobile par rapport au châssis (15) selon une direction de déplacement (A) et destiné à coopérer avec un clapet (11) de la soupape de réglage de débit (8), un actionneur (48) agencé pour régler automatiquement la position du poussoir (18) par rapport au châssis (15), un bouton de réglage (33) agencée pour régler manuellement la position du poussoir (18) par rapport au châssis (15), et un élément thermostatique (25) agencé pour réguler la position du poussoir (18) par rapport au châssis (15) en fonction de la température ambiante. La tête thermostatique (4) comprend une liaison mécanique entre le bouton de réglage (33) et un organe d'actionnement (51) de l'actionneur de telle sorte qu'un déplacement de l'organe d'actionnement (51) entraîne un déplacement du bouton de réglage (33), et un déplacement du bouton de réglage (33) entraîne un déplacement de l'organe d'actionnement (51).

## Description

La présente invention concerne une tête thermostatique, et un robinet thermostatique comprenant une telle tête thermostatique.

Un robinet thermostatique comprend de façon connue un corps de robinet pourvu d'une soupape de réglage de débit, et une tête thermostatique agencée pour agir sur la soupape de réglage de débit.

Il existe différents types de têtes thermostatiques, tels que les têtes thermostatiques à réglage manuel, les têtes thermostatiques à réglage automatique, et les têtes thermostatiques dites hybrides.

Une tête thermostatique à réglage manuel peut comprendre par exemple :
- un châssis destiné à être monté sur le corps de robinet,
- un poussoir monté mobile par rapport au châssis selon une direction de déplacement et destiné à coopérer avec un clapet de la soupape de réglage de débit,
- un élément thermostatique relié au poussoir et agencé pour déplacer le poussoir selon sa direction de déplacement en fonction de la température ambiante, et
- un bouton de réglage manuel agencé pour déplacer l'élément thermostatique parallèlement à la direction de déplacement du poussoir de manière à régler la position du poussoir par rapport au châssis, le bouton de réglage comprenant des graduations correspondant chacune à une position de réglage prédéterminée du poussoir, et pouvant être mises sélectivement, par déplacement du bouton de réglage, en regard d'un repère de lecture porté par exemple par une partie fixe de la tête.

Ainsi, le bouton de réglage permet de régler manuellement la position du poussoir de telle sorte que ladite position corresponde à une température de chauffage prédéterminée, et l'élément thermostatique permet de modifier la position du poussoir en fonction de la température ambiante de manière à réguler la température ambiante autour de la température de chauffage prédéterminée.

Une tête thermostatique à réglage automatique peut comprendre, à la place du bouton de réglage manuel, un actionneur agencé pour régler automatiquement la position du poussoir par rapport au châssis et une unité de commande agencée pour commander l'actionneur. Une telle tête thermostatique permet de faciliter le réglage de la position du poussoir par rapport au châssis. Toutefois, l'inconvénient d'une telle tête thermostatique réside dans le fait qu'il n'est pas possible d'effectuer un réglage de la position du poussoir lors d'une défaillance électronique de l'unité de commande ou d'un défaut d'alimentation électrique de celle-ci.

Afin de pallier un tel inconvénient des têtes thermostatiques dites hybrides, c'est-à-dire permettant un réglage automatique et manuel du poussoir, ont été développées.

Une tête thermostatique hybride peut comprendre par exemple :
- un châssis destiné à être monté sur le corps de robinet,
- un poussoir monté mobile par rapport au châssis selon une direction de déplacement et destiné à coopérer avec un clapet de la soupape de réglage de débit,
- un élément thermostatique relié au poussoir et agencé pour déplacer le poussoir selon sa direction de déplacement en fonction de la température ambiante,
- un actionneur agencé pour régler automatiquement la position du poussoir par rapport au châssis, et
- un bouton de réglage manuel agencé pour déplacer l'élément thermostatique parallèlement à la direction de déplacement du poussoir de manière à régler la position du poussoir par rapport au châssis.

Un inconvénient d'une telle tête thermostatique réside notamment dans le fait que, lorsque la position du poussoir a été réglée automatiquement à l'aide de l'actionneur, un utilisateur ne peut connaître la position de réglage du poussoir que par l'intermédiaire d'un panneau d'affichage relié à l'unité de commande. Ainsi, lors d'une défaillance électronique de l'unité de commande ou du panneau d'affichage, ou encore lors d'un défaut d'alimentation électrique de ces éléments, bien qu'un utilisateur puisse modifier manuellement la position du poussoir à l'aide du bouton de réglage, et donc modifier la température de chauffage, il ne peut nullement régler précisément cette température de chauffage à une valeur souhaitée. Un utilisateur peut par exemple être amené à manipuler successivement plusieurs fois le bouton de réglage pour obtenir une température de chauffage proche de celle souhaitée.

En outre, selon la position initiale du bouton de réglage et la position du poussoir à la suite d'un réglage automatique, la course de réglage du poussoir susceptible d'être obtenue à l'aide du bouton de réglage peut être insuffisante pour obtenir une température de chauffage proche de celle souhaitée.

La présente invention vise à remédier à ces inconvénients.

Le problème technique à la base de l'invention consiste donc à fournir une tête thermostatique qui permette un réglage aisé et précis de la position du poussoir, aussi bien automatiquement que manuellement.

A cet effet, la présente invention concerne une tête thermostatique, comprenant :
- un châssis destiné à être monté sur un corps de robinet pourvu d'une soupape de réglage de débit,
- un poussoir monté mobile par rapport au châssis selon une direction de déplacement et destiné à coopérer avec un clapet de la soupape de réglage de débit,
- un actionneur pourvu d'un organe d'actionnement et agencé pour régler automatiquement la position du poussoir par rapport au châssis par l'intermédiaire de l'organe d'actionnement,
- un bouton de réglage agencée pour régler manuellement la position du poussoir par rapport au châssis, et
- un élément thermostatique agencé pour réguler la position du poussoir par rapport au châssis en fonction de la température ambiante,
**caractérisée en ce que** la tête thermostatique comprend une liaison mécanique entre le bouton de réglage et l'organe d'actionnement de telle sorte qu'un déplacement de l'organe d'actionnement entraîne un déplacement du bouton de réglage, et un déplacement du bouton de réglage entraîne un déplacement de l'organe d'actionnement.

Une telle liaison mécanique entre l'organe d'actionnement et le bouton de réglage permet à un utilisateur de connaître précisément à tout moment la position de réglage du poussoir, et donc la température de chauffage réglée, même si ce réglage a été réalisé automatiquement via l'actionneur. Ces dispositions permettent ainsi à l'utilisateur de réaliser un réglage manuel précis de la position du poussoir à l'aide du bouton de réglage, par exemple en prévoyant des graduations sur le bouton de réglage.

De plus, une telle liaison mécanique assure un positionnement optimal du bouton de réglage lors d'un réglage automatique du poussoir, et donc une course de réglage adaptée pour un éventuel réglage manuel ultérieur.

La tête thermostatique selon l'invention autorise par conséquent un réglage aisé et précis de la position du poussoir, aussi bien automatiquement que manuellement.

Selon un mode de réalisation de l'invention, le châssis de la tête thermostatique est destiné à être monté sur une portion de raccordement intégrée à un robinet thermostatique ou à un radiateur de chauffage.

Selon un mode de réalisation de l'invention, l'actionneur est agencé pour déplacer l'organe d'actionnement suivant un mouvement prédéterminé dans un premier mode de fonctionnement, et pour autoriser un déplacement de l'organe d'actionnement suivant ledit mouvement prédéterminé dans un deuxième mode de fonctionnement. De préférence, le premier mode de fonctionnement correspond à un état de fonctionnement normal de l'actionneur, et le deuxième mode de fonctionnement correspond à un état d'arrêt ou de dysfonctionnement de l'actionneur.

Selon un mode de réalisation de l'invention, l'organe d'actionnement comprend un axe longitudinal, l'actionneur étant agencé pour entraîner en rotation l'organe d'actionnement autour de son axe longitudinal dans le premier mode de fonctionnement, et agencé de telle sorte que l'organe d'actionnement est libre en rotation autour de son axe longitudinal dans le deuxième mode de fonctionnement.

Avantageusement, l'axe longitudinal de l'organe d'actionnement est sensiblement parallèle à la direction de déplacement du poussoir.

Selon un mode de réalisation de l'invention, le bouton de réglage est monté rotatif par rapport au châssis, par exemple autour d'un axe de rotation sensiblement parallèle à la direction de déplacement du poussoir.

De façon préférentielle, la liaison mécanique est agencée pour coupler en rotation l'organe d'actionnement et le bouton de réglage.

Selon un mode de réalisation de l'invention, le bouton de réglage comprend une denture annulaire couplée en rotation avec la liaison mécanique.

Selon un mode de réalisation de l'invention, l'organe d'actionnement comprend un pignon couplé en rotation avec la liaison mécanique.

Selon un mode de réalisation de l'invention, la liaison mécanique comprend une roue dentée montée rotative par rapport au châssis et engrenant avec la denture annulaire du bouton de réglage et le pignon de l'organe d'actionnement.

Selon un mode de réalisation de l'invention, l'élément thermostatique est agencé pour déplacer en translation le poussoir selon sa direction de déplacement de manière à réguler la position du poussoir par rapport au châssis en fonction de la température ambiante.

Selon un mode de réalisation de l'invention, l'élément thermostatique comprend un corps de thermostat monté mobile en translation par rapport au châssis sensiblement parallèlement à la direction de déplacement du poussoir, la tête thermostatique comprenant des moyens de transformation de mouvement agencés pour transformer le mouvement du bouton de réglage en un mouvement de translation du corps de thermostat par rapport au châssis.

Les moyens de transformation de mouvement comportent par exemple un organe d'entraînement guidé par rapport au châssis selon un mouvement hélicoïdal d'axe sensiblement parallèle à la direction de déplacement du poussoir, l'organe d'entraînement étant couplé en rotation avec le bouton de réglage. L'organe d'entraînement peut comprendre une denture périphérique couplée en rotation avec la denture annulaire du bouton de réglage.

Selon un autre mode de réalisation de l'invention, les moyens de transformation de mouvement comportent un organe d'entraînement monté mobile en rotation par rapport au châssis autour d'un axe sensiblement parallèle à la direction de déplacement du poussoir, et pourvu d'une came d'entraînement ou d'une rampe d'entraînement.

Selon un mode de réalisation de l'invention, l'organe d'actionnement est couplé en rotation avec l'organe d'entraînement, la liaison mécanique étant formée au moins en partie par l'organe d'entraînement.

Avantageusement, les moyens de transformation de mouvement comportent un organe de guidage prenant appui contre le corps de thermostat et guidé en translation par rapport au châssis sensiblement parallèlement à la direction de déplacement du poussoir, l'organe d'entraînement étant agencé pour déplacer en translation l'organe de guidage.

Selon un mode de réalisation de l'invention, l'organe de guidage et l'organe d'entraînement sont reliés mécaniquement par un système vis-écrou de telle sorte qu'un déplacement de l'organe d'actionnement ou du bouton de réglage entraîne un déplacement en translation du corps de thermostat.

Selon un mode de réalisation de l'invention, la tête thermostatique comprend un organe de transmission relié au poussoir et monté mobile en translation par rapport au châssis sensiblement parallèlement à la direction de déplacement du poussoir, l'élément thermostatique étant relié à l'organe de transmission et agencé pour déplacer en translation l'organe de transmission par rapport au châssis en fonction de la température ambiante.

Selon un mode de réalisation de l'invention, le poussoir est solidaire en translation de l'organe de transmission.

Selon un mode de réalisation de l'invention, la tête thermostatique comprend un ressort de rappel agencé pour rappeler l'organe de transmission vers une position correspondant à un état contracté de l'élément thermostatique. De préférence, le ressort de rappel est agencé pour sensiblement immobiliser en rotation l'organe de transmission par rapport au châssis.

Selon un mode de réalisation de l'invention, l'organe de transmission comprend une première portion filetée sensiblement immobile en rotation, et le poussoir comprend une deuxième portion filetée agencée pour coopérer avec la première portion filetée, les première et deuxième portions filetées étant d'axes sensiblement parallèles à la direction de déplacement du poussoir, l'organe d'actionnement étant couplé en rotation avec le poussoir et agencé pour entraîner en rotation la deuxième portion filetée par rapport à la première portion filetée. De préférence, le poussoir comprend une denture périphérique engrenant avec le pignon de l'organe d'actionnement.

Selon un mode de réalisation de l'invention, la tête thermostatique comprend un ressort de sur-course comportant une première extrémité prenant appui contre une portion mobile de l'élément thermostatique et une deuxième extrémité prenant appui contre l'organe de transmission.

Selon un autre mode de réalisation de l'invention, la tête thermostatique comprend un ressort de sur-course comportant une première extrémité prenant appui contre le poussoir et une deuxième extrémité prenant appui contre l'organe de transmission.

De façon préférentielle, la tête thermostatique comprend une unité de commande agencée pour commander l'actionneur, et un élément de détection relié à l'unité de commande et agencé pour détecter la position du poussoir par rapport au châssis.

Un tel élément de détection permet à l'unité de commande de connaître à tout moment la position du poussoir, même après une absence d'énergie électrique ou après un réglage manuel de la position du poussoir. Ces dispositions évitent notamment une réinitialisation de l'algorithme de régulation de l'unité de commande à chaque fois que l'utilisateur intervient manuellement sur la tête thermostatique

Selon un mode de réalisation de l'invention, l'élément de détection est un potentiomètre monté sur le châssis. Le potentiomètre peut être par exemple annulaire, et le poussoir peut comprendre une portion agencée pour coulisser à travers le potentiomètre.

Avantageusement, l'unité de commande est agencée pour mémoriser électroniquement la position du poussoir par rapport au châssis via l'élément de détection.

Selon un mode de réalisation de l'invention, l'actionneur est un moteur électrique rotatif et l'organe d'actionnement est l'arbre de sortie du moteur électrique.

Selon un mode de réalisation de l'invention, le moteur électrique rotatif comprend une pluralité de bobines destinées à être alimentées électriquement, le moteur électrique rotatif étant agencé de telle sorte que l'arbre de sortie est libre en rotation lorsque les bobines ne sont pas alimentées électriquement.

De préférence, le bouton de réglage est muni de graduations correspondant chacune à une position de réglage prédéterminée du poussoir, et pouvant être mises sélectivement, par déplacement du bouton de réglage, en regard d'un repère de lecture porté par exemple par le corps de robinet ou une partie fixe de la tête thermostatique.

Selon un mode de réalisation de l'invention, le poussoir est monté libre en rotation et en translation par rapport au châssis selon sa direction de déplacement.

Selon un mode de réalisation de l'invention, le bouton de réglage délimite un logement dans lequel sont logés l'élément thermostatique et l'actionneur.

Selon un mode de réalisation de l'invention, le bouton de réglage est monté immobile en translation par rapport au châssis.

Le poussoir est avantageusement monté mobile par rapport au châssis entre une première position correspondant à une ouverture maximale de la soupape de réglage de débit et une deuxième position correspondant à la fermeture de la soupape de réglage de débit.

La présente invention concerne en outre un robinet thermostatique comprenant une tête thermostatique selon l'invention.

De toute façon l'invention sera bien comprise à l'aide de la description qui suit en référence au dessin schématique annexé représentant, à titre d'exemples non limitatifs, deux formes d'exécution de ce robinet thermostatique.
Figure 1 est une vue en perspective d'un robinet thermostatique selon un premier mode de réalisation de l'invention.
Figure 2 est une vue partielle en perspective du robinet thermostatique de la figure 1.
Figures 3 et 4 sont des vues en coupe longitudinale du robinet thermostatique de la figure 1.
Figure 5 est une vue partielle en coupe longitudinale d'un robinet thermostatique selon un deuxième mode de réalisation l'invention.
Figure 6 est une vue en coupe selon la ligne VI-VI de la figure 5.

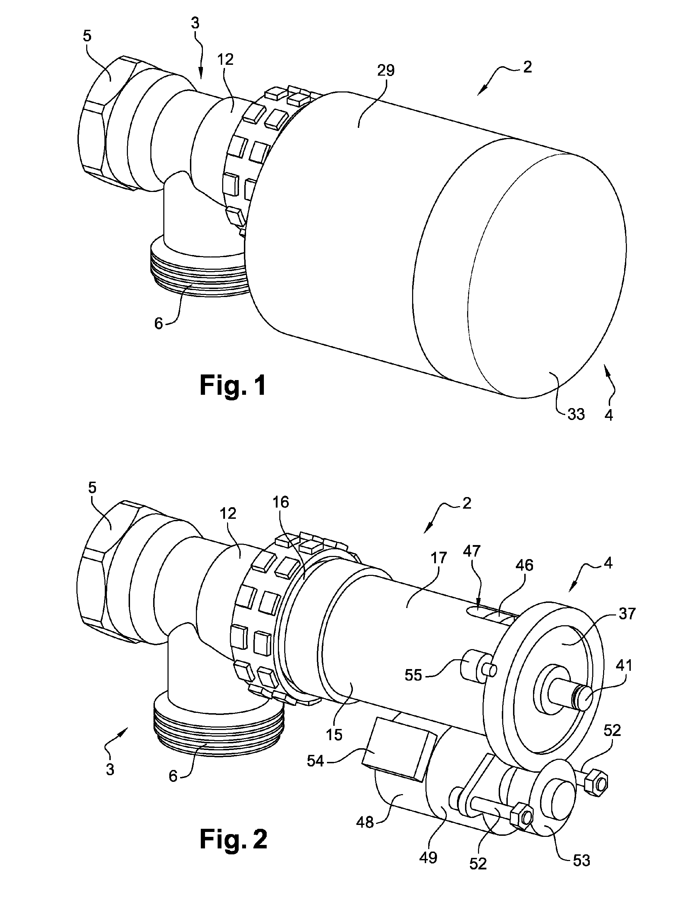

Les figures 1 à 4 représentent un robinet thermostatique 2 destiné à équiper un radiateur de chauffage. Le robinet thermostatique 2 comporte un corps de robinet 3 et une tête thermostatique 4.

Le corps de robinet 3 comporte une première et une deuxième portions de raccordement 5, 6 destinées à être raccordées respectivement à des conduites d'amenée et de sortie d'eau. Le corps de robinet 3 comporte en outre une ouverture de passage 7 agencée pour mettre en communication les première et deuxième portions de raccordement 5, 6.

Le corps de robinet 3 comporte également une soupape de réglage de débit 8. La soupape de réglage de débit 8 comprend un siège 9 entourant l'ouverture de passage 7 et un clapet 11 mobile en translation entre une position d'obturation dans laquelle le clapet 11 prend appui contre le siège 9 et obture l'ouverture de passage 7 afin d'isoler les première et une deuxième portions de raccordement 5, 6, et une position de libération dans laquelle le clapet 11 est éloigné du siège 9 de clapet et libère l'ouverture de passage 7 afin de mettre en communication les première et une deuxième portions de raccordement 5, 6.

Le corps de robinet 3 comprend une troisième portion de raccordement 12, par exemple coaxiale avec la première portion de raccordement 5, et dans laquelle est montée au moins en partie la soupape de réglage de débit 8.

La soupape de réglage de débit 8 comprend avantageusement des moyens de rappel, tels qu'un ressort de rappel 13, agencés pour solliciter le clapet 11 vers sa position de libération. De préférence, la soupape de réglage de débit 8 comprend également un insert 14 monté, par exemple par vissage, dans la troisième portion de raccordement 12 du corps de robinet 3. L'insert 14 comprend un orifice de passage 15 à travers lequel s'étend le clapet 11.

La tête thermostatique 4 comprend un châssis 15, par exemple tubulaire, comportant une portion de montage 16 destinée à être montée sur la troisième portion de raccordement 12 du corps de robinet 3, et une portion de support 17 solidaire de la portion de montage 16.

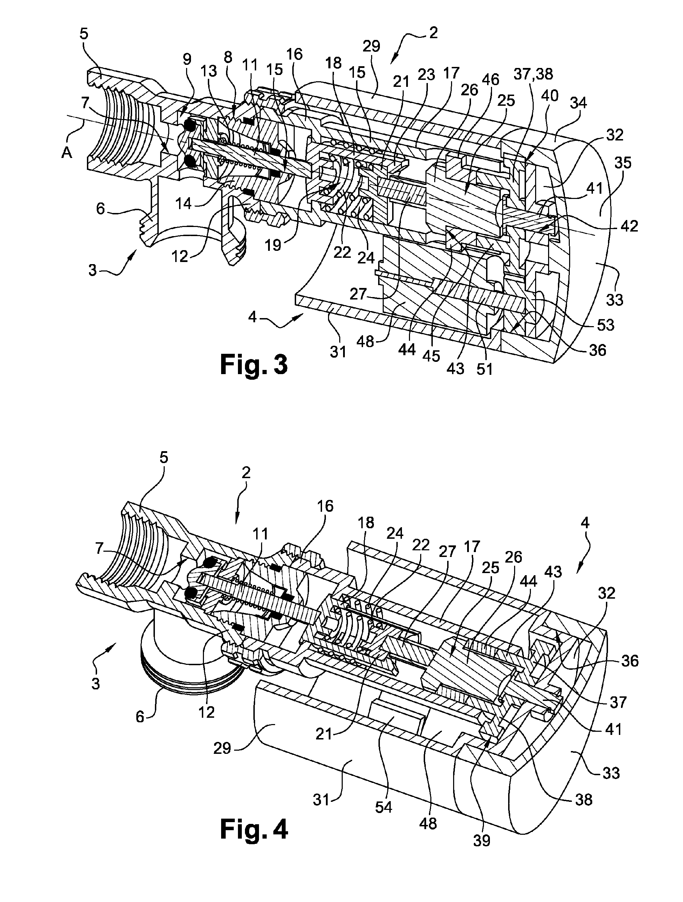

La tête thermostatique 2 comprend en outre un poussoir 18 destiné à coopérer avec le clapet 11 de la soupape de réglage de débit 8. Le poussoir 18 est monté mobile en translation par rapport au châssis 15 selon une direction de déplacement A. Plus particulièrement, le poussoir 18 est monté mobile selon la direction de déplacement A entre une première position (représentée sur les figures 3 et 4) correspondant à une ouverture maximale de la soupape de réglage de débit 8 et une deuxième position correspondant à la fermeture de la soupape de réglage de débit 8.

Le poussoir 18 est agencé pour prendre appui contre le clapet 11 de la soupape de réglage de débit 8, et délimite un logement intérieur 19.

La tête thermostatique 2 comprend également un organe de transmission 21 monté mobile en translation par rapport au châssis 15 parallèlement à la direction de déplacement A du poussoir 18. Selon le mode de réalisation représenté aux figures 1 à 4, l'organe de transmission 21 comprend une portion centrale montée coulissante dans le logement intérieur 19 du poussoir 18, et une portion périphérique disposée à l'extérieur du poussoir 18 et agencée pour coopérer avec la paroi intérieure de la portion de support 17 du châssis 15.

La tête thermostatique 2 comprend en outre un ressort de rappel 22 disposé dans le logement intérieur 19 du poussoir 18, et comportant une première extrémité prenant appui contre la portion centrale de l'organe de transmission 21 et une deuxième extrémité prenant appui contre le poussoir 18. Le ressort de rappel 22 est agencé pour solliciter l'organe de transmission 21 contre des portions de retenue 23 prévues à l'extrémité du poussoir 18 opposée au clapet 11. La tête thermostatique 2 peut éventuellement comprendre un deuxième ressort de rappel 24 disposé à l'extérieur du poussoir 18, et comportant une première extrémité prenant appui contre la portion périphérique de l'organe de transmission 21 et une deuxième extrémité prenant appui contre le poussoir 18.

La tête thermostatique 2 comprend également un élément thermostatique 25 logé dans la portion de support 17 du châssis 15. L'élément thermostatique 25 est agencé pour se dilater ou se contracter en fonction de la température ambiante. L'élément thermostatique 25 comprend plus particulièrement un corps de thermostat 26 monté mobile en translation par rapport au châssis 15 sensiblement parallèlement à la direction de déplacement A du poussoir 18, et une tige de thermostat 27 reliée à l'organe de transmission 21. La tige de thermostat 27 est agencée pour déplacer en translation l'organe de transmission 21 par rapport au châssis 15 parallèlement à la direction de déplacement A du poussoir 18. Selon le mode de réalisation représenté sur les figures 1 à 4, la tige de thermostat 27 est solidaire de la portion centrale de l'organe de transmission 21.

La tête thermostatique 2 comprend en outre un capot de protection 29 solidaire du châssis 15 et enveloppant au moins en partie ce dernier. Le capot de protection 29 comporte par exemple une paroi latérale 31 cylindrique s'étendant sensiblement sur toute la longueur de la portion de support 17 du châssis 15, et une paroi de fond 32 obturant l'extrémité de la paroi latérale 31 opposée au corps de robinet 3.

La tête thermostatique 2 comprend également un bouton ou volant de réglage 33 agencée pour régler manuellement la position du poussoir 18 par rapport au châssis 15. Le bouton de réglage 33 est monté rotatif par rapport au châssis 15 selon un axe de rotation parallèle à la direction de déplacement A du poussoir 18. Le bouton de réglage 33 est par exemple monté immobile en translation par rapport au châssis 15. Selon le mode de réalisation représenté sur les figures 1 à 4, le bouton de réglage 33 est monté mobile en rotation sur le capot de protection 29.

Le bouton de réglage 33 comporte une paroi latérale 34 cylindrique et une paroi de fond 35 obturant l'extrémité de la paroi latérale 34 opposée au corps de robinet 3. La paroi latérale 34 comporte, sur sa surface intérieure, une denture annulaire 36 dont la fonction sera explicitée ci-après.

De préférence, le bouton de réglage 33 est muni de graduations (non représentées sur les figures) correspondant chacune à une position de réglage prédéterminée du poussoir 18, et pouvant être mises sélectivement, par rotation du bouton de réglage 33, en regard d'un repère de lecture (non représenté sur les figures) porté par exemple par le capot de protection 29.

La tête thermostatique comprend également des moyens de transformation de mouvement agencés pour transformer le mouvement de rotation du bouton de réglage 33 en un mouvement de translation du corps de thermostat 26 par rapport au châssis 15.

Les moyens de transformation de mouvement comportent un organe d'entraînement 37 guidé par rapport au châssis 15 selon un mouvement hélicoïdal d'axe sensiblement parallèle à la direction de déplacement A du poussoir 18. L'organe d'entraînement 37 comprend une portion d'entraînement 38 pourvue d'une denture périphérique 39 couplée en rotation avec la denture annulaire 36 du bouton de réglage 33. Afin de permettre une telle coopération, le capot de protection 29 comprend une lumière de passage 40 dans laquelle fait saillie la portion d'entraînement 38.

L'organe d'entraînement 37 comprend également une broche de montage 41 solidaire de la portion d'entraînement 38 et d'axe parallèle à la direction de déplacement A du poussoir 18. La broche de montage 41 est pourvue d'un filetage et est insérée dans un alésage fileté 42 ménagé dans la paroi de fond 32 du capot de protection 29. Ainsi, en fonction du sens de rotation du bouton de réglage 33, il est possible de dévisser ou de visser l'organe d'entraînement 37 par rapport au capot de protection 29.

L'organe d'entraînement 37 comporte en outre une portion d'actionnement 43 faisant saillie à l'intérieur de la portion de support 17 du châssis 15 et s'étendant le long du corps de thermostat 26. De préférence, la portion d'actionnement 43 est cylindrique et s'étend autour du corps de thermostat 26.

Les moyens de transformation de mouvement comportent en outre une bague de guidage 44 montée autour du corps de thermostat 26 et prenant appui contre un épaulement 45 ménagé sur ce dernier. La bague de guidage 44 est guidée en translation par rapport au châssis 15 sensiblement parallèlement à la direction de déplacement A du poussoir 18. Pour cela, la bague de guidage 44 comprend deux tétons 46 ménagés sur sa surface extérieure et montés coulissants respectivement dans des fentes de guidage 47 ménagées sur la portion de support 17 du châssis 15 et s'étendent sensiblement parallèlement à la direction de déplacement A du poussoir 18. Les fentes de guidage 47 permettent en outre d'assurer une ventilation de l'élément thermostatique 25. Inversement, afin d'assurer un guidage en translation de la bague de guidage 44, la surface intérieure de la portion de support 17 pourraient comporter des tétons agencés pour coopérer avec des rainures ou fentes de guidage ménagées sur la bague de guidage 44.

La portion d'actionnement 43 de l'organe d'entraînement 37 est agencée pour prendre appui contre la bague de guidage 44 et pour déplacer celle-ci en translation parallèlement à la direction de déplacement A du poussoir 18 lorsque le bouton de réglage 33 est entraîné en rotation autour de son axe.

La tête thermostatique 2 comprend de plus un moteur électrique rotatif 48 agencé pour régler automatiquement la position du poussoir 18 par rapport au châssis 15. Le moteur électrique rotatif 48 comporte un carter 49 logeant notamment une pluralité de bobines destinées à être alimentées électriquement, et un arbre de sortie 51 d'axe longitudinal parallèle à la direction de déplacement A du poussoir 18. Le carter 49 est par exemple fixé sur le capot de protection 29, et plus particulièrement sur la paroi de fond 32 de celui-ci, à l'aide de vis de fixation 52.

Le moteur électrique 48 est agencé de telle sorte que l'arbre de sortie 51 est entraîné en rotation autour de son axe longitudinal lorsque les bobines sont alimentées électriquement, et de telle sorte que l'arbre de sortie 51 est libre en rotation autour de son axe longitudinal lorsque les bobines ne sont pas alimentées électriquement et lorsque le moteur électrique 48 est dans un état de fonctionnement dégradé ne permettant pas un entraînement en rotation de l'arbre de sortie 51.

Comme montré sur la figure 3, l'arbre de sortie 51 est couplé en rotation avec l'organe d'entraînement 37, et est agencé pour entraîner en rotation l'organe d'entraînement 37 par rapport au capot de protection 29. L'arbre de sortie 51 comprend plus particulièrement un pignon 53 engrenant avec la denture périphérique 39 ménagée sur la portion d'entraînement 38 de l'organe d'entraînement 37. Ainsi, en fonction du sens de rotation de l'arbre de sortie 51, il est possible de dévisser ou de visser l'organe d'entraînement 37 par rapport au capot de protection 29.

La tête thermostatique 2 comprend en outre une unité de commande 54 agencée pour commander le fonctionnement du moteur électrique 48, et plus particulièrement la mise en marche et l'arrêt de celui-ci afin de régler la position du poussoir 18 de manière à régler la température de chauffage à une valeur prédéterminée. L'unité de commande 54 peut par exemple être reliée à des moyens de sélection agencés pour sélectionner un programme de commande du moteur électrique 48. Dans ce cas, l'unité de commande 54 permet de régler automatiquement la position du poussoir 18 en fonction du programme de commande sélectionné.

La tête thermostatique 2 comprend de plus un potentiomètre 55 monté sur le châssis 15 et agencé pour déterminer la position du poussoir 18 par rapport au châssis 15. Le potentiomètre 55 est de préférence relié à l'unité de commande 54 de manière à permettre à celle-ci de connaître à tout moment la position du poussoir 18, même après une absence d'énergie électrique ou après un réglage manuel de la position du poussoir 18. Selon le mode de réalisation représenté sur les figures 1 à 4, le potentiomètre 55 est disposé à proximité de l'organe d'entraînement 37, et peut être par exemple couplé en rotation avec l'organe d'entraînement 37.

La tête thermostatique 2 comprend de plus une liaison mécanique entre le bouton de réglage 33 et l'arbre de sortie 51 du moteur électrique 48 de telle sorte qu'une rotation de l'arbre de sortie 51 entraîne une rotation du bouton de réglage 33, et une rotation du bouton de réglage 33 entraîne une rotation de l'arbre de sortie 51. Selon le mode de réalisation représenté sur les figures 1 à 4, la liaison mécanique est formée par l'organe d'entraînement 37.

Le fonctionnement du robinet thermostatique 2 selon l'invention va maintenant être décrit.

Lorsqu'un utilisateur souhaite régler automatiquement la température de chauffage d'un local comprenant un radiateur équipé d'un robinet thermostatique 2, il sélectionne ladite température de chauffage ou le programme de chauffage approprié à l'aide de moyens de sélection reliés à l'unité de commande 54, par exemple par liaison sans fils. L'unité de commande 54 génère alors une consigne de commande du moteur électrique 48 de telle sorte que l'arbre de sortie 51 du moteur électrique 48 est entraîné en rotation autour de son axe longitudinal de manière à provoquer, via le pignon 53 et la denture périphérique 39 de la portion d'entraînement 38, un vissage ou un dévissage de l'organe d'entraînement 37 par rapport au capot de protection 29, et donc un déplacement en translation du corps de thermostat 26 via la portion d'actionnement 43 et la bague de guidage 44. Un tel déplacement du corps de thermostat 26 permet, par l'intermédiaire de la tige d'actionnement 27, de l'organe de transmission 21 et des ressorts de rappel 22, 24, de positionner le poussoir 18 dans la position de réglage correspondant à la température de chauffage sélectionnée. Il doit être noté que l'entraînement en rotation de l'arbre de sortie 51 provoque un pivotement du bouton de réglage 33 autour de son axe longitudinal du fait de la coopération entre l'organe d'entraînement 37 et le bouton de réglage 33. Ainsi, l'utilisateur peut visualiser le réglage du poussoir 18 par l'intermédiaire des graduations prévues sur la surface extérieure du bouton de réglage 33.

Tant que la température ambiante est plus faible que la température de chauffage réglée, l'élément thermostatique 25 est rétracté et l'organe de transmission 21 est sollicité vers le corps de thermostat 26 de telle sorte que le poussoir 18 reste situé dans une position correspondant à une position d'ouverture de la soupape de réglage de débit 8.

Au fur et à mesure que la température ambiante augmente, l'élément thermostatique 25 se dilate et l'organe de transmission 21 et le poussoir 18 sont translatés par la tige d'actionnement 27 en direction de la portion de montage 16 de sorte que le poussoir 18 repousse le clapet 11 de la soupape de réglage de débit 8 à l'encontre du ressort de rappel 13 vers la position de fermeture de l'ouverture de passage 7. Un tel déplacement du clapet 11 diminue la quantité de fluide traversant le radiateur, et donc la quantité de calorie apportée au local à chauffer.

Dès que la température ambiante atteint la température de chauffage réglée, le poussoir 18 repousse le clapet 11 en position de fermeture de la soupape de réglage de débit 8, ce qui a pour conséquence de stopper l'écoulement de fluide à l'intérieur du radiateur.

Si la température ambiante continue malgré tout d'augmenter alors que le clapet 11 est en position de fermeture de la soupape de réglage de débit 8, les ressorts de rappel 22, 24 se contractent et absorbent l'excédent de poussée de la tige d'actionnement 27. Les ressorts de rappel 22, 24 forment ainsi des ressorts de sur-course.

Au contraire, si la température ambiante diminue et tombe en dessous de la température réglée, l'élément thermostatique 25 se contracte et l'organe de transmission 21 et le poussoir 18 sont translatés en direction du corps de thermostat 26, de sorte que le poussoir 18 autorise un déplacement du clapet 11 de la soupape de réglage de débit 8 vers une position d'ouverture de cette dernière, ce qui a pour conséquence d'autoriser un écoulement de fluide à l'intérieur du radiateur et donc un réchauffement de la température ambiante.

Par conséquent, l'élément thermostatique 25 permet de réguler la température ambiante autour de la température de chauffage réglée.

Lorsqu'un utilisateur souhaite régler manuellement la température de chauffage d'un local équipé d'un radiateur pourvu d'un robinet thermostatique 2 selon l'invention, il entraîne en rotation le bouton de réglage 33 autour de son axe longitudinal de manière à positionner la graduation correspondant à la température de chauffage souhaitée en regard du repère de lecture. Une telle rotation du bouton de réglage 33 provoque un dévissage ou un vissage de l'organe d'entraînement 37 par rapport au capot de protection 29, via la denture annulaire 36 du bouton de réglage 33 et la denture périphérique 39 de l'organe d'entraînement 37, et enfin un positionnement du poussoir 18 dans la position de réglage correspondant à la température de chauffage souhaitée, et ce via la bague de guidage 44, le corps de thermostat 26, l'organe de transmission 21 et les ressorts de rappel 22, 24. Un tel déplacement du poussoir 18 est déterminé par le potentiomètre 55, et donc mémorisé par l'unité de commande 48.

Il doit être noté que la régulation de la température ambiante autour de la température de chauffage sélectionnée est identique que le réglage de celle-ci ait été réalisé automatiquement ou manuellement.

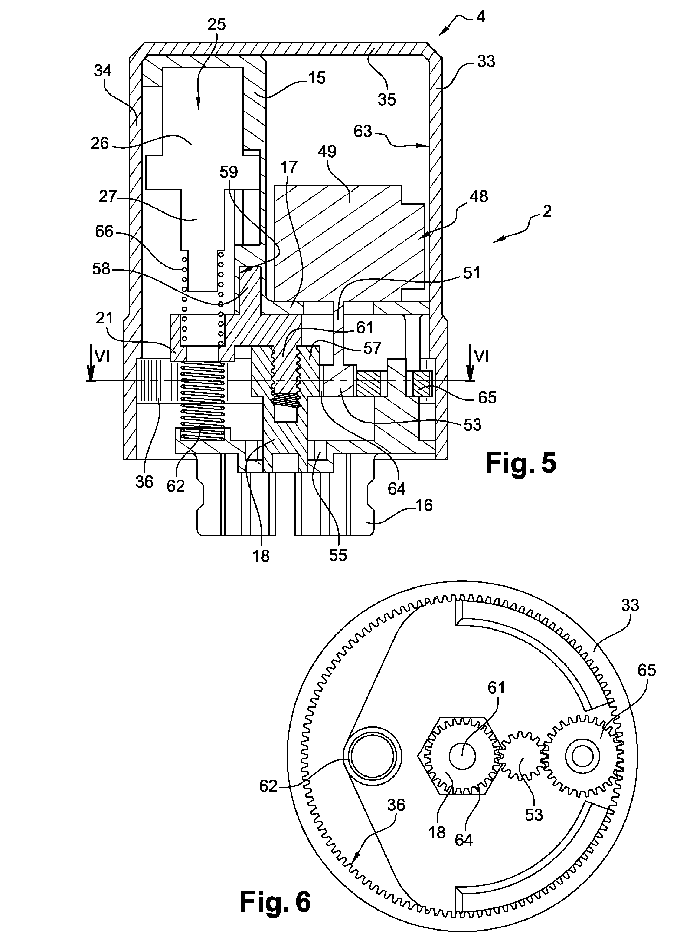

Les figures 5 et 6 représentent un robinet thermostatique 2 selon un deuxième mode de réalisation qui diffère de celui représenté sur les figures 1 à 4 notamment en ce que le corps de thermostat 26 est fixe par rapport au châssis 15, en ce que le poussoir 18 est monté mobile en translation et en rotation par rapport au châssis 15, et en ce que l'arbre de sortie 51 du moteur électrique 48 est couplé en rotation avec le poussoir 18.

Selon ce deuxième mode de réalisation, le poussoir 18 est monté solidaire en translation sur l'organe de transmission 21, et comprend une portion d'assemblage 57 filetée intérieurement d'axe parallèle à la direction de déplacement A du poussoir 18. L'organe de transmission 21 comprend une portion de montage 58 montée coulissante dans un alésage 59 de forme complémentaire ménagé dans la portion de support 17 du châssis 15 et s'étendant parallèlement à la direction de déplacement A du poussoir 18. L'organe de transmission 21 comprend en outre une portion d'assemblage 61 filetée extérieurement s'étendant à l'opposée de la portion de montage 58 et parallèlement à la direction de déplacement A du poussoir 18. La portion d'assemblage 61 de l'organe de transmission 21 est agencée pour coopérer par vissage avec la portion d'assemblage 57 du poussoir 18.

La tête thermostatique 2 comprend également un ressort de rappel 62 agencé pour solliciter l'organe de transmission 21 à l'opposé de la portion de montage 16 du châssis 15. De préférence, le ressort de rappel 62 est également agencé pour sensiblement immobiliser en rotation l'organe de transmission 21 par rapport au châssis 15.

Selon ce deuxième mode de réalisation, le bouton de réglage 33 est monté rotatif autour du châssis 15 et forme le capot de protection du châssis 15. Le bouton de réglage 33 délimite ainsi un logement 63 dans lequel sont logés le moteur électrique 48, la portion de support 17 du châssis 15, l'organe de transmission 21 et le ressort de rappel 62.

De plus, selon ce deuxième mode de réalisation, l'arbre de sortie 51 est couplé en rotation avec le poussoir 18, et est agencé pour entraîner en rotation la portion d'assemblage 57 du poussoir 18 par rapport à la portion d'assemblage 61 de l'organe de transmission 21. Plus particulièrement, le pignon de l'arbre de sortie 51 engrène avec une denture périphérique 64 ménagée sur la portion d'assemblage 57 du poussoir 18. Ainsi, en fonction du sens de rotation de l'arbre de sortie 51, il est possible de dévisser ou de visser la portion d'assemblage 57 du poussoir 18 par rapport à la portion d'assemblage 61 de l'organe de transmission 21.

Selon ce deuxième mode de réalisation, la liaison mécanique entre le bouton de réglage 33 et l'arbre de sortie 51 du moteur électrique 48 comprend une roue dentée 65 montée rotative par rapport au châssis 15 autour d'un axe de rotation parallèle à la direction de déplacement A du poussoir 18. La roue dentée 65 est agencée pour s'engrener avec la denture annulaire 36 du bouton de réglage 33 et le pignon 53 de l'arbre de sortie 51.

Selon ce deuxième mode de réalisation, le carter 49 est monté sur la portion de support 17 du châssis 15. De plus, selon ce deuxième mode de réalisation, la tête thermostatique 4 comprend un ressort de sur-course 66 comportant une première extrémité prenant appui contre la tige d'actionnement 27 de l'élément thermostatique 25 et une deuxième extrémité prenant appui contre l'organe de transmission 21.

En outre, selon ce deuxième mode de réalisation, le potentiomètre 55 est annulaire, et le poussoir 18 est agencé pour coulisser à travers le potentiomètre 55.

Le fonctionnement du robinet thermostatique 2 selon le deuxième mode de réalisation diffère de celui du robinet thermostatique 2 représenté sur les figures 1 à 4. Il sera explicité ci-après uniquement les différences de fonctionnement.

Selon le deuxième mode de réalisation, un entraînement en rotation de l'arbre de sortie 51 autour de son axe longitudinal provoque, via le pignon 53 et la denture périphérique 64 du poussoir 18, un vissage ou un dévissage de la portion d'assemblage 57 du poussoir 18 par rapport à la portion d'assemblage 61 de l'organe de transmission 21, et donc un positionnement du poussoir 4 dans sa position de réglage sans déplacement du corps de thermostat 26 par rapport au châssis 15. Il doit être noté que l'entraînement en rotation de l'arbre de sortie 51 provoque également un pivotement du bouton de réglage 33 autour de son axe longitudinal par l'intermédiaire de la roue dentée 65 et de la denture annulaire 36 ménagée sur la surface intérieure du bouton de réglage 33.

Selon le deuxième mode de réalisation, lorsque l'élément thermostatique 25 se dilate, l'organe de transmission 21 et le poussoir 18 sont translatés par l'intermédiaire du ressort de sur-course 66 en direction de la portion de montage 16 à l'encontre du ressort de rappel 62, et lorsque l'élément thermostatique 25 se contracte, l'organe de transmission 21 et le poussoir 18 sont translatés par le ressort de rappel 62 en direction de l'élément thermostatique 25.

En outre, selon le deuxième mode de réalisation, un entraînement en rotation du bouton de réglage 33 autour de son axe longitudinal provoque un dévissage ou un vissage de la portion d'assemblage 57 du poussoir 18 par rapport à la portion d'assemblage 61 de l'organe de transmission 21, via la denture annulaire 36, la roue dentée 65, le pignon 53 et la denture périphérique 64, et ainsi un positionnement du poussoir 18 dans la position de réglage correspondant à la température de chauffage sélectionnée.

Comme il va de soi, l'invention ne se limite pas aux seules formes d'exécution de ce robinet thermostatique, décrites ci-dessus à titre d'exemples, elle en embrasse au contraire toutes les variantes de réalisation.

## Revendications

1. Tête thermostatique (4), comprenant :
- un châssis (15) destiné à être monté sur une portion de raccordement (12) pourvue d'une soupape de réglage de débit (8),
- un poussoir (18) monté mobile par rapport au châssis (15) selon une direction de déplacement (A) et destiné à coopérer avec un clapet (11) de la soupape de réglage de débit (8),
- un actionneur (48) pourvu d'un organe d'actionnement (51) et agencé pour régler automatiquement la position du poussoir (18) par rapport au châssis (15) par l'intermédiaire de l'organe d'actionnement (51),
- un bouton de réglage (33) agencée pour régler manuellement la position du poussoir (18) par rapport au châssis (15), et
- un élément thermostatique (25) agencé pour réguler la position du poussoir (18) par rapport au châssis (15) en fonction de la température ambiante,
**caractérisée en ce que** la tête thermostatique (4) comprend une liaison mécanique entre le bouton de réglage (33) et l'organe d'actionnement (51) de telle sorte qu'un déplacement de l'organe d'actionnement (51) entraîne un déplacement du bouton de réglage (33), et un déplacement du bouton de réglage (33) entraîne un déplacement de l'organe d'actionnement (51).

2. Tête thermostatique selon la revendication 1, dans laquelle l'actionneur (48) est agencé pour déplacer l'organe d'actionnement (51) suivant un mouvement prédéterminé dans un premier mode de fonctionnement, et pour autoriser un déplacement de l'organe d'actionnement (51) suivant ledit mouvement prédéterminé dans un deuxième mode de fonctionnement.

3. Tête thermostatique selon la revendication 2, dans laquelle l'organe d'actionnement (51) comprend un axe longitudinal, l'actionneur (48) étant agencé pour entraîner en rotation l'organe d'actionnement (51) autour de son axe longitudinal dans le premier mode de fonctionnement, et agencé de telle sorte que l'organe d'actionnement (51) est libre en rotation autour de son axe longitudinal dans le deuxième mode de fonctionnement.

4. Tête thermostatique selon l'une des revendications 1 à 3, dans laquelle le bouton de réglage (33) est monté rotatif par rapport au châssis (15), par exemple autour d'un axe de rotation sensiblement parallèle à la direction de déplacement du poussoir (18).

5. Tête thermostatique selon les revendications 3 et 4, dans laquelle la liaison mécanique est agencée pour coupler en rotation l'organe d'actionnement (51) et le bouton de réglage (33).

6. Tête thermostatique selon la revendication 5, dans laquelle le bouton de réglage (33) comprend une denture annulaire (36) couplée en rotation avec la liaison mécanique.

7. Tête thermostatique selon la revendication 5 ou 6, dans laquelle l'organe d'actionnement (51) comprend un pignon (53) couplé en rotation avec la liaison mécanique.

8. Tête thermostatique selon les revendications 6 et 7, dans laquelle la liaison mécanique comprend une roue dentée (65) montée rotative par rapport au châssis (15) et engrenant avec la denture annulaire (36) du bouton de réglage (33) et le pignon (53) de l'organe d'actionnement (51).

9. Tête thermostatique selon l'une des revendications 1 à 8, dans laquelle l'élément thermostatique (25) comprend un corps de thermostat (26) monté mobile en translation par rapport au châssis (15) sensiblement parallèlement à la direction de déplacement (A) du poussoir (18), la tête thermostatique (4) comprenant des moyens de transformation de mouvement agencés pour transformer le mouvement du bouton de réglage (33) en un mouvement de translation du corps de thermostat (26) par rapport au châssis (15).

10. Tête thermostatique selon la revendication 9, dans laquelle les moyens de transformation de mouvement comportent un organe d'entraînement (37) guidé par rapport au châssis (15) selon un mouvement hélicoïdal d'axe sensiblement parallèle à la direction de déplacement (A) du poussoir (18), l'organe d'entraînement (37) étant couplé en rotation avec le bouton de réglage (33).

11. Tête thermostatique selon les revendications 6 et 10, dans laquelle l'organe d'entraînement (37) comprend une denture périphérique (39) couplée en rotation avec la denture annulaire (36) du bouton de réglage (33).

12. Tête thermostatique selon la revendication 10 ou 11, dans laquelle l'organe d'actionnement (51) est couplé en rotation avec l'organe d'entraînement (37), la liaison mécanique étant formée au moins en partie par l'organe d'entraînement (37).

13. Tête thermostatique selon l'une des revendications 10 à 12, dans laquelle les moyens de transformation de mouvement comportent un organe de guidage (44) prenant appui contre le corps de thermostat (26) et guidé en translation par rapport au châssis (15) sensiblement parallèlement à la direction de déplacement (A) du poussoir (18), l'organe d'entraînement (37) étant agencé pour déplacer en translation l'organe de guidage (44).

14. Tête thermostatique selon l'une des revendications 1 à 13, laquelle comprend un organe de transmission (21) relié au poussoir (18) et monté mobile en translation par rapport au châssis (15) sensiblement parallèlement à la direction de déplacement (A) du poussoir, l'élément thermostatique (25) étant relié à l'organe de transmission (21) et agencé pour déplacer en translation l'organe de transmission (21) par rapport au châssis (15) en fonction de la température ambiante.

15. Tête thermostatique selon la revendication 14, dans laquelle le poussoir (18) est solidaire en translation de l'organe de transmission (21).

16. Tête thermostatique selon la revendication 14 ou 15, dans laquelle l'organe de transmission (21) comprend une première portion filetée (61) sensiblement immobile en rotation, et le poussoir (18) comprend une deuxième portion filetée (57) agencée pour coopérer avec la première portion filetée (61), les première et deuxième portions filetées (57, 61) étant d'axes sensiblement parallèles à la direction de déplacement (A) du poussoir (18), l'organe d'actionnement (51) étant couplé en rotation avec le poussoir (18) et agencé pour entraîner en rotation la deuxième portion filetée (57) par rapport à la première portion filetée (61).

17. Tête thermostatique selon les revendications 7 et 16, dans laquelle le poussoir (18) comprend une denture périphérique (64) engrenant avec le pignon (53) de l'organe d'actionnement (51).

18. Robinet thermostatique comprenant une tête thermostatique selon l'une des revendications 1 à 17.
